# FASCICULE DE BREVET EUROPEEN

(11) **EP 3 325 145 B1**
(45) Date de publication et mention de la délivrance du brevet: **07.10.2020**
(21) Numéro de dépôt: 16739061.6
(22) Date de dépôt: 06.07.2016
(51) Int. Cl.: B01J 27/185, B01J 23/63, B01J 23/62, B01J 37/00, B01J 37/02, B01J 23/83, C10G 35/09, B01J 21/04

(54) **CATALYSEUR MULTI-MÉTALLIQUE DOPÉ PAR DU PHOSPHORE ET DU CÉRIUM**
MULTIMETALLISCHER, MIT PHOSPHOR UND EINEM CERIUM DOTIERTER KATALYSATOR
MULTI-METALLIC CATALYST DOPED WITH PHOSPHORUS AND CERIUM

(30) Priorité: 24.07.2015 FR 1557055
(43) Date de publication de la demande: 30.05.2018
(73) Titulaire: IFP Energies nouvelles, 92500 Rueil-Malmaison (FR)
(72) Inventeur: AVENIER, Priscilla, 38000 Grenoble (FR); DIEHL, Fabrice, 69003 Lyon (FR); GUEGAN, Carine, 69007 Lyon (FR); SANCHEZ, Eric, 69230 Saint Genis Laval (FR)
(74) Mandataire: IFP Energies nouvelles
(86) Numéro de dépôt international: PCT/EP2016/065970
(87) Numéro de publication internationale: WO 2017/016832

(56) Documents cités:
- FR-A1- 2 947 465
- US-A- 3 915 845
- US-A- 4 367 137
- US-A1- 2002 155 946
- US-A1- 2004 011 702
- US-A1- 2006 102 520
- US-A1- 2007 215 523

## Description

La présente invention concerne le domaine de la conversion des hydrocarbures et plus spécifiquement du reformage de charges hydrocarbonées en présence d'un catalyseur pour produire des coupes essences et des composés aromatiques. Plus particulièrement, l'invention concerne un catalyseur amélioré à base d'au moins un métal noble, d'étain, de phosphore et d'un lanthanide, son procédé de préparation et son utilisation dans un procédé de reformage.

Les procédés de reformage catalytique permettent d'augmenter significativement l'indice d'octane des fractions essences provenant de la distillation directe du pétrole brut et/ou d'autres procédés de raffinage tels que par exemple le craquage catalytique ou le craquage thermique. Le procédé de reformage catalytique est un procédé très largement utilisé par les raffineurs pour valoriser l'essence lourde obtenue par distillation. Les hydrocarbures de la charge d'essence lourde (notamment les paraffines et les naphtènes) contenant environ 5 à 12 atomes de carbone par molécule sont transformés au cours de ce procédé en hydrocarbures aromatiques et en paraffines branchées. Cette transformation est obtenue à haute température (en moyenne dans la gamme 480 à 520°C), à pression basse à moyenne (0,2 à 2,5 MPa) et en présence d'un catalyseur. Le reformage catalytique produit du reformat qui permet d'améliorer significativement l'indice d'octane des coupes pétrolières, et de l'hydrogène. Le reformat est majoritairement formé de composés en C5+ (contenant au moins 5 atomes de carbone).

Les catalyseurs de reformage sont des catalyseurs multimétalliques. Il existe deux grandes catégories de catalyseurs de reformage ayant des propriétés différentes : les catalyseurs platine-étain généralement utilisés sous forme de billes dans un réacteur à lit mobile dans des procédés dits CCR (pour Continuous Catalytic Reforming selon la terminologie anglo-saxonne) et les catalyseurs platine-rhénium généralement utilisés sous forme d'extrudés dans des lit fixes.

Pour ces deux types de catalyseurs, de nombreux brevets comme FR2947465, US20040011702 ou encore US3915845, décrivent l'addition de promoteurs afin d'améliorer leurs performances en reformage de charges hydrocarbonées.
En ce qui concerne le dopage par des lanthanides, et notamment le cérium, le brevet US 2,814,599 décrit l'addition de promoteurs tels que le gallium, l'indium, le scandium, l'yttrium, le lanthane, le thallium ou l'actinium, à des catalyseurs à base de platine ou de palladium. Le document US2013/0015103 décrit des catalyseurs avec du Ce (PtSnCe). Le document US2013/0256194 décrit ce même type de catalyseurs en combinaison avec des composés alcalins en très faible teneur. Le document EP1390140 décrit des catalyseurs dopés avec du Ce et/ou de l'Eu. Les documents CN103372454 ou encore US6,239,063 décrivent des catalyseurs comportant d'autres lanthanides en plus du Ce sur un même catalyseur.
Le phosphore est connu par ailleurs pour augmenter les rendements en composés hydrocarbonés de strictement plus de 4 atomes de carbone (C5+) et en particulier en produits aromatiques. Cette propriété est revendiquée dans les brevets US 2,890,167, US 3,706,815, US 4,367,137, US 4,416,804, US 4,426,279 et US 4,463,104.
Le document US2012/122665 décrit un catalyseur comprenant du platine, de l'étain, du phosphore et au moins un promoteur sélectionné dans le groupe constitué par le gallium, l'indium, le thallium, l'arsenic, l'antimoine et bismuth.
Le document EP1656991 décrit un catalyseur comprenant du platine et de l'étain ayant un rapport Pt/Sn inférieur à 0,9, et éventuellement un autre élément choisi parmi le germanium, le gallium, le cérium, le lanthane, l'europium, l'indium, le phosphore, le nickel, le fer, le tungstène, le molybdène, le zinc ou le cadmium, seul ou en mélange dans une teneur élémentaire comprise entre 0,1 et 10 % pds par rapport à la masse du catalyseur, sans pour autant relier un effet particulier aux promoteurs.
Il a également été décrit dans le document US2007/0215523 que l'ajout de quantités diluées de phosphore, moins de 0,4 % pds, stabilise le support en permettant une meilleure rétention de surface spécifique et de chlore pendant son utilisation dans des procédés de reformage catalytique. Ce document divulgue un catalyseur à base de platine et de phosphore comprenant optionnellement un autre élément choisi parmi l'étain, le rhénium, le germanium, le plomb, l'indium, le gallium, l'iridium, le lanthane, le cérium, le bore, le cobalt, le nickel et le fer, seul ou en mélange dans une teneur élémentaire comprise entre 0,01 et 5 % pds par rapport à la masse du catalyseur.

Dans ce contexte, un des objectifs de la présente invention est de proposer un catalyseur présentant une sélectivité et une stabilité améliorées dans un procédé de reformage sans détérioration de l'activité.

Par sélectivité on entend le rendement de composés en C5+ exprimé en pourcentage massique par rapport à l'effluent à un niveau d'activité donnée (typiquement à un niveau d'indice d'octane donné).
L'activité est généralement caractérisée comme l'indice d'octane des composés en C5+ donné à un niveau de sévérité ou s'exprime à l'inverse par une température nécessaire pour atteindre un indice d'octane donné (aussi appelé RON ou Research Octane Number selon la terminologie anglo-saxonne).
Par stabilité on entend la stabilité de l'activité qui est généralement mesurée par l'incrément thermique appliqué en fonctionnement dans l'unité par unité de temps ou de charge pour maintenir la performance à un indice d'octane donné.

L'invention porte sur un catalyseur comprenant un support, au moins un métal noble M, de l'étain, du phosphore et un seul élément du groupe des lanthanides sous forme de cérium, la teneur en métal noble M étant comprise entre 0,02 et 2 % poids, la teneur en étain étant comprise entre 0,005 et 10 % poids, la teneur en élément phosphore étant comprise entre 0,4 et 1 % poids, et la teneur en cérium étant comprise entre 0,02 et 0,3 % poids par rapport à la masse du catalyseur.

Il a été montré que la présence simultanée d'un promoteur phosphore et d'au moins du cérium, chaque promoteur étant présent dans une certaine quantité sur un catalyseur à base d'un métal noble et d'étain, confère au catalyseur final une sélectivité et une stabilité bien supérieures aux catalyseurs de l'état de l'art ne contenant qu'un de ces promoteurs ou aux catalyseurs de l'état de l'art contenant les deux promoteurs en trop faible ou trop forte quantité. Sans être lié à aucune théorie, il semble que la présence simultanée d'une quantité d'un promoteur de phosphore comprise entre 0,4 et 1 % poids et d'une quantité cérium entre 0,02 et 0,3 % poids par rapport à la masse du catalyseur montre de façon surprenante un effet synergique pour l'amélioration de la sélectivité et de la stabilité sans que cet effet synergique soit prévisible par la simple addition des effets d'amélioration connus des promoteurs.

La teneur en métal noble M est comprise entre 0,02 à 2 % poids par rapport à la masse du catalyseur.
Selon une variante, le métal M est le platine ou le palladium.
La teneur en élément étain est comprise entre 0,005 et 10 % poids par rapport à la masse du catalyseur.

Selon une variante, le rapport atomique Sn/M est compris entre 0,5 et 4,0, le rapport P/M est compris entre 0,2 et 30,0, et le rapport lanthanide(s)/M est compris entre 0,1 et 5,0.
Selon une variante, le support comprend de la silice, de l'alumine ou de la silice-alumine.
Selon une variante, le catalyseur contient en outre un composé halogéné.
Selon cette variante, la teneur en composé halogéné est comprise entre 0,1 à 8 % poids par rapport à la masse du catalyseur.

L'invention se rapport également à un procédé de préparation d'un catalyseur comprenant un support, au moins un métal noble M, de l'étain, du phosphore et un seul élément du groupe des lanthanides sous forme de cérium, la teneur en métal noble M étant comprise entre 0,02 et 2 % poids, la teneur en étain étant comprise entre 0,005 et 10 % poids, la teneur en élément phosphore étant comprise entre 0,4 et 1 % poids, et la teneur en cérium étant comprise entre 0,02 et 0,3 % poids par rapport à la masse du catalyseur, comprenant les étapes successives suivantes :
a) on prépare un support comprenant l'étain, le phosphore et le métal noble,
b) on sèche le précurseur obtenu à l'étape a) sous flux d'un gaz neutre ou sous flux d'un gaz contenant de l'oxygène à une température inférieure à 200°C, et on calcine à une température comprise entre 350 et 650°C,
c) on introduit tout le cérium en imprégnant le précurseur séché et calciné obtenu à l'étape b) par une solution d'imprégnation comprenant un précurseur de cérium,
d) on sèche le précurseur obtenu à l'étape c) sous flux d'un gaz neutre ou sous flux d'un gaz contenant de l'oxygène à une température inférieure à 200°C, et on calcine à une température comprise entre 350 et 650°C.

Selon une variante, l'étape a) comprend les étapes suivantes :
a1) on prépare un support comprenant de l'étain en introduisant le précurseur d'étain lors de la mise en forme du support,
a2) on imprègne le support contenant de l'étain obtenu à l'étape a1) par une solution d'imprégnation comprenant au moins un précurseur d'un métal noble et un précurseur de phosphore.
Selon une autre variante, l'étape a) comprend les étapes suivantes :
a1') on prépare un support comprenant de l'étain et du phosphore en introduisant le précurseur d'étain et le précurseur du phosphore lors de la mise en forme du support,
a2') on imprègne le support contenant de l'étain et du phosphore obtenu à l'étape a1') par une solution d'imprégnation comprenant au moins un précurseur d'un métal noble.
Selon une autre variante, le catalyseur obtenu après l'étape d) est soumis à un traitement sous hydrogène.
L'invention se rapporte aussi à l'utilisation du catalyseur selon l'invention ou préparé selon le procédé de préparation dans un procédé de reformage.
Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC.
Toutes les teneurs des différents composantes du catalyseur, et notamment les teneurs en métal noble, en étain, en phosphore, en élément du groupe des lanthanides et en composé halogéné, sont exprimées relativement à l'élément, sauf indication explicite contraire.

### DESCRIPTION DETAILLEE DE L'INVENTION

### Catalyseur

L'invention concerne un catalyseur comprenant un support, au moins un métal noble M, de l'étain, du phosphore et un seul élément du groupe des lanthanides sous forme de cérium, la teneur en métal noble M étant comprise entre 0,02 et 2 % poids, la teneur en étain étant comprise entre 0,005 et 10 % poids, la teneur en élément phosphore étant comprise entre 0,4 et 1 % poids, et la teneur en cérium étant comprise entre 0,02 et 0,3 % poids par rapport à la masse du catalyseur.

Le support comprend généralement au moins un oxyde sélectionné dans le groupe constitué par les oxydes de magnésium, de titane, de zirconium, d'aluminium, de silicium. De préférence, le support comprend de la silice, de l'alumine ou de la silice-alumine, et de manière très préférée de l'alumine. De préférence, le support comprend de l'alumine, et de préférence l'alumine est l'alumine gamma.
Le support présente avantageusement un volume poreux total compris entre 0,1 et 1,5 cm³/g, de manière plus préférée compris entre 0,4 et 0,8 cm³/g. Le volume poreux total est mesuré par porosimétrie au mercure selon la norme ASTM D4284 avec un angle de mouillage de 140°, telle que décrite dans l'ouvrage Rouquerol F.; Rouquerol J.; Singh K. « Adsorption by Powders & Porous Solids: Principle, methodology and applications », Academic Press, 1999, par exemple au moyen d'un appareil modèle Autopore III™ de la marque Microméritics™.
La surface spécifique du support d'alumine est avantageusement comprise entre 50 et 600 m².g⁻¹, de préférence entre 100 et 400 m².g⁻¹, de manière plus préférée entre 150 et 300 m².g⁻¹. La surface spécifique est déterminée dans la présente invention par la méthode B.E.T selon la norme ASTM D3663, méthode décrite dans le même ouvrage cité ci-dessus.
Avantageusement, le support présente une valeur de densité de remplissage tassée (DRT) comprise entre 0,4 et 0,8 g/mL, de préférence compris entre 0,5 et 0,7 g/mL. La mesure de DRT consiste à introduire le support dans une éprouvette (typiquement de volume 100 mL) dont on a préalablement déterminé le volume puis, par vibration, à le tasser jusqu'à obtenir un volume constant. La masse volumique apparente du produit tassé est calculée en comparant la masse introduite et le volume occupé après tassement. L'incertitude sur la mesure est généralement de l'ordre de ± 0,01g/mL.
Ainsi, le support lorsqu'il est utilisé en tant que support de catalyseur de reformage permet de remplir les exigences d'un support dit dense (e.g. densité de remplissage tassée autour de 0,6 à 0,7 g/mL) ainsi que les exigences d'un support dit léger (e.g. densité de remplissage tassée autour de 0,5 à 0,6 g/mL).
De préférence, la valeur de densité de remplissage tassée (DRT) dudit support est comprise entre 0,5 et 0,7 g/mL.
Le support se présente avantageusement sous forme de billes, d'extrudés, de pastilles ou de poudre. De façon préférée, le support se présente sous forme de billes. Le support peut être obtenu par toute technique connue de l'homme du métier. La mise en forme peut être réalisée par exemple par extrusion, par pastillage, par la méthode de la coagulation en goutte (oil-drop selon la terminologie anglo-saxonne), par granulation au plateau tournant ou par toute autre méthode bien connue de l'homme du métier.
Lorsque le support se présente sous forme de billes, son diamètre est généralement compris entre 0,5 et 5 mm. Une telle bille peut être fabriquée par la méthode de la coagulation en goutte. Selon cette méthode et lorsque le support est une alumine, on prépare une suspension contenant un gel d'alumine (tel que la boehmite (oxyhydroxyde d'aluminium cristallisé) ou la pseudoboehmite), un émulsifiant, éventuellement des précurseurs métalliques et de l'eau et on transfère la suspension dans un pot d'égouttage équipé de buses dont les orifices sont calibrés pour former des gouttelettes. On procède alors à un égouttage de la suspension par gravité dans une colonne contenant une phase organique en partie supérieure (phase pétrole) et une phase aqueuse basique (solution ammoniacale) en partie inférieure de sorte à récolter les particules sphéroïdales en pied de phase aqueuse basique. C'est lors du passage de la gouttelette à travers la phase organique qu'a lieu la mise en forme des sphères tandis que la gélification (ou coagulation) s'effectue dans la phase aqueuse. Les billes sont ensuite séchées et calcinées.
Lorsque le support se présente sous forme d'extrudés, ceux-ci peuvent être préparés en malaxant un gel d'alumine avec de l'eau et des agents peptisants appropriés, tels que l'acide chlorhydrique ou nitrique, en présence éventuelle de précurseurs métalliques, jusqu'à ce qu'une pâte extrudable soit formée (malaxage acide cisaillant). La pâte obtenue peut être extrudée à travers une filière de taille appropriée pour former des extrudés qui sont ensuite séchées puis calcinés. Préalablement à l'extrusion il peut parfois être nécessaire d'ajouter un agent neutralisant de pH tel qu'une solution ammoniacale. En général, le diamètre des extrudés est compris entre 0,5 à 5 mm, de préférence avec un rapport longueur-à-diamètre de 1: 1 à 5: 1.

Un composant essentiel du catalyseur selon l'invention est un métal noble M, de préférence le platine ou le palladium, de manière très préférée le platine. Ce métal noble peut exister dans le catalyseur final en tant que composé oxyde, sulfure, halogénure, oxyhalogénure, en combinaison chimique avec un ou plusieurs des autres composants du catalyseur ou en encore sous forme de métal élémentaire. La teneur en métal noble M dans le catalyseur selon l'invention se situe entre 0,02 à 2% poids, de préférence entre 0,05 et 1,5% poids, de manière encore plus préférée entre 0,1 et 0,8% poids par rapport à la masse du catalyseur.

Un autre composant essentiel du catalyseur selon l'invention est l'étain. Cet élément peut exister dans le catalyseur final en tant que composé oxyde, sulfure, halogénure, oxyhalogénure, en combinaison chimique avec un ou plusieurs des autres composants du catalyseur ou encore sous forme de métal élémentaire.
La teneur en étain dans le catalyseur selon l'invention est comprise entre 0,005 et 10 % poids, de manière plus préférée entre 0,01 et 5% poids et de manière très préférée entre 0,1 et 1% poids.

Un autre composant essentiel du catalyseur selon l'invention est le phosphore. Cet élément peut exister dans le catalyseur final en tant que composé oxyde ou oxyde mixte, phosphates, polyphosphates, sulfure, halogénure, oxyhalogénure, hydrure ou en combinaison chimique avec un ou plusieurs des autres composants du catalyseur.
La teneur en élément phosphore dans le catalyseur selon l'invention est compris entre 0,4 et 1% poids et de préférence entre 0,4 et 0,8 % poids.

Un autre composant essentiel du catalyseur selon l'invention est le cérium. Ce composant de lanthanides peut exister dans le catalyseur final en tant que composé oxyde, sulfure, halogénure, oxyhalogénure, en combinaison chimique avec un ou plusieurs des autres composants du catalyseur ou encore sous forme de métal élémentaire.
La teneur en cérium dans le catalyseur selon l'invention est entre 0,02 et 0,3 % pds par rapport à la masse du catalyseur.

La présence simultanée d'une quantité de phosphore comprise entre 0,4 et 1 % poids et d'une quantité de cérium entre 0,02 et 0,3 % poids par rapport à la masse du catalyseur montre un effet synergique surprenant notamment pour les fonctions essentielles du catalyseur que sont la sélectivité et la stabilité et cela sans détérioration de l'activité.
Le rapport atomique Sn/M est généralement compris entre 0,5 et 4,0, de manière plus préférée entre 1,0 et 3,5, et de manière très préférée entre 1,3 et 3,2.
Le rapport P/M est généralement compris entre 0,2 et 30,0, de manière plus préférée entre 0,5 et 20,0, et de manière très préférée entre 1,0 et 15,0.
Le rapport Ce/M est généralement compris entre 0,1 et 5,0, de manière plus préférée entre 0,2 et 3,0, et de manière très préférée entre 0,4 et 2,2.

Le catalyseur selon l'invention peut également comprendre de préférence un composé halogéné, sélectionné dans le groupe constitué par le fluor, le chlore, le brome et l'iode. La teneur en composé halogéné est généralement comprise entre 0,1 et 8% poids, de préférence entre 0,2 et 3% poids de catalyseur après calcination. De préférence, le composé halogéné est le chlore.

Le catalyseur selon l'invention peut inclure éventuellement également d'autres promoteurs choisis parmi les groupes IA, IIA, IIIA (notamment l'indium), IVA (notamment le germanium), et VA du tableau périodique, le cobalt, le nickel, le fer, le tungstène, le molybdène, le chrome, le bismuth, l'antimoine, le zinc, le cadmium et le cuivre. Lorsque ces éléments sont présents dans le catalyseur, la teneur exprimée en oxyde est généralement comprise entre 0,01 à 2% poids, de manière préférée entre 0,05 et 1% poids par rapport à la masse du catalyseur.

Cependant, le catalyseur est de préférence constitué d'un support, d'au moins un métal noble M, d'étain, de phosphore et de cérium, et de manière particulièrement préférée il est constitué d'un support, de platine, d'étain, de phosphore et de cérium dans les quantités spécifiques de phosphore et de cérium indiquées ci-dessus.
Tous les éléments sont répartis de préférence uniformément dans le support.

### Procédé de préparation du catalyseur

Le catalyseur selon l'invention peut être préparé selon tout mode de préparation connu de l'homme de l'art.
Le métal noble peut être incorporé dans le support d'une manière quelconque appropriée, telle que la co-précipitation, échange d'ions ou par imprégnation. De préférence, il est introduit par imprégnation du support préalablement mis en forme, par exemple par imprégnation en excès ou à sec (le volume de solution contenant l'élément à introduire correspondant au volume poreux du support), et de préférence par imprégnation en excès. Pour ceci, on imprègne le support par une solution d'imprégnation comprenant au moins le métal noble.
En général, le chlorure d'hydrogène ou un autre acide similaire peuvent également être ajoutés à la solution d'imprégnation pour faciliter davantage l'incorporation ou la fixation à la surface du support du composant métal noble et la distribution uniforme des composants métalliques dans l'ensemble du matériau de support.

En outre, il est généralement préférable d'imprégner le support après qu'il a été calciné, afin de minimiser le risque de lessivage du métal noble.
Lorsque le métal noble est le platine, les précurseurs de platine font partie du groupe suivant, sans que cette liste soit limitative : acide hexachloroplatinique, acide bromoplatinique, chloroplatinate d'ammonium, chlorures de platine, dichlorocarbonyl dichlorure de platine, chlorure de platine tétraamine ou encore le dihydroxyplatinediammine. Des complexes organiques de platine, tels que le diacétylacétonate de platine (II), peuvent être également mis en oeuvre. De préférence le précurseur utilisé est l'acide hexachloroplatinique.

L'étain peut être incorporé dans le support d'une manière quelconque appropriée, telle que la co-précipitation, l'échange d'ions ou l'imprégnation et ceci à n'importe quelle étape du procédé de préparation du catalyseur.
Selon une première variante, il peut être introduit dans le support, par exemple lors de la synthèse du support ou lors de la mise en forme du support. Sans être exhaustives, les techniques d'addition avant ou pendant la dissolution des précurseurs oxydes du support lors de la synthèse du support, avec ou sans mûrissement, peuvent convenir. L'introduction peut donc être simultanée ou successive au mélange des précurseurs du support. L'étain peut être introduit lors de la synthèse du support selon une technique de type sol-gel ou encore être ajouté à un sol d'alumine. L'étain peut également être introduit lors de la mise en œuvre du support selon les techniques de l'art antérieur de mise en forme du support telles que les procédures de mise en forme par extrusion ou par coagulation en goutte (oil-drop).
Selon une deuxième variante, l'étain peut être introduit sur le support, par exemple par imprégnation du support préalablement mis en forme. L'imprégnation du support par une solution contenant un ou plusieurs précurseurs d'étain peut être réalisée par excès de solution ou bien à sec. L'imprégnation peut être réalisée en présence d'espèces agissant sur l'interaction entre le précurseur d'étain et le support. Ces espèces peuvent être par exemple, et sans être limitatif, des acides minéraux (HCI, HNO₃) ou organiques (types acides carboxyliques ou polycarboxyliques), et des composés organiques de type complexants, comme cela est décrit par exemple dans les brevets US 6,872,300 et US 6,291,394. De manière préférée, l'imprégnation est réalisée selon toute technique connue de l'homme de l'art permettant d'obtenir une répartition homogène de l'étain au sein du catalyseur.
Les précurseurs de l'étain peuvent être minéraux ou de type organométallique, éventuellement de type organométallique hydrosoluble. Le précurseur de l'étain peut être choisi dans le groupe formé par les composés halogénés, hydroxydes, carbonates, carboxylates, sulfates, tartrates et nitrates. Ces formes de l'étain peuvent être introduites dans le milieu de préparation du catalyseur telles quelles ou générées *in situ* (par exemple par introduction d'étain et d'acide carboxylique). Les précurseurs de type organométallique à base d'étain peuvent être par exemple SnR₄, où R représente un groupe alkyl, par exemple le groupement butyle, Me₃SnCl, Me₂SnCl₂, Et₃SnCl, Et₂SnCl₂, EtSnCl₃, iPrSnCl₂ et les hydroxydes Me₃SnOH, Me₂Sn(OH)₂, Et₃SnOH, Et₂Sn(OH)₂, les oxydes (Bu₃Sn)₂O, l'acétate Bu₃SnOC(O)Me. De façon préférée, les espèces halogénées d'étain, en particulier chlorées, seront utilisées. En particulier, SnCl₂ ou SnCl₄ seront employés avantageusement.
Selon une troisième variante, l'étain peut également être introduit pour partie lors de la synthèse ou mise en forme du support et pour partie par dépôt sur le support mis en forme.
De préférence, l'étain est introduit dans le support, c'est à dire lors de la synthèse du support ou lors de la mise en forme du support. Dans le cas d'un support à base d'alumine sous forme de billes préparé par la technique oil-drop, le précurseur de l'étain est introduit dans la suspension à égoutter.

Le phosphore peut être incorporé dans le support d'une manière quelconque appropriée, telle que la co-précipitation, échange d'ions ou par imprégnation et ceci à n'importe quelle étape du procédé de préparation du catalyseur. Il peut notamment être introduit selon les trois variantes décrites dans le cas de l'étain.
Selon une variante, le phosphore est introduit dans le support, c'est à-dire lors de sa mise en forme, par exemple simultanément avec l'étain.
Selon une autre variante, le phosphore est introduit par imprégnation, et de manière particulièrement préférée il est introduit par imprégnation en même temps que le métal noble. Dans ce cas, la solution d'imprégnation contient le précurseur du métal noble et le précurseur du phosphore.

Les précurseurs du phosphore peuvent être des acides ou des sels, par exemple H₃PO₄, H₃PO₃, H₃PO₂, NH₄H₂PO₄, (NH₄)₂HPO₄.

Le cérium peut être incorporé dans le support d'une manière quelconque appropriée, telle que la co-précipitation, échange d'ions ou par imprégnation et ceci à n'importe quelle étape du procédé de préparation du catalyseur. Il peut notamment être introduit selon les trois variantes décrites dans le cas de l'étain. De préférence, il est introduit par imprégnation. Selon l'invention, il est introduit après avoir introduit le métal noble comme décrit ci-dessous.
Le cérium peut être choisi dans le groupe formé par les composés halogénés, hydroxydes, carbonates, carboxylates, sulfates, tartrates et nitrates. Ces formes de cérium peuvent être introduites dans le milieu de préparation du catalyseur telles quelles ou générées in situ (par exemple par introduction de cérium et d'acide carboxylique). De façon préférée, les espèces halogénées, en particulier chlorées, de cérium seront utilisées. De préférence, on utilisera par exemple le chlorure de cérium ou le nitrate de cérium.
Lorsque d'autres promoteurs sont présents, ils peuvent être incorporés dans le support d'une manière quelconque appropriée, telle que la co-précipitation, échange d'ions ou par imprégnation et ceci à n'importe quelle étape du procédé de préparation du catalyseur. Ils peuvent notamment être introduits selon les trois variantes décrites dans le cas de l'étain.
Lorsque plusieurs composantes du catalyseur sont introduites dans le support, c'est à dire lors de la synthèse du support ou lors de la mise en forme du support, l'introduction peut être simultanée ou avoir lieu séparément.
Après introduction des composantes dans le support, le protocole de préparation des catalyseurs selon l'invention nécessite généralement un séchage et une calcination avant le dépôt du métal noble et éventuellement d'autres composantes. Le séchage est généralement effectué à une température comprise entre 50°C et 250°C, de manière plus préférée entre 70°C et 200°C, sous air ou sous atmosphère inerte. La calcination est de préférence menée à une température comprise entre 350 et 650°C et de préférence comprise entre 400 et 600°C et de manière encore plus préférée comprise entre 450 et 550°C. La montée en température peut être régulière ou inclure des paliers de température intermédiaires, ces paliers étant atteints avec des vitesses de montée en température fixes ou variables. Ces montées en température peuvent donc être identiques ou différer par leur vitesse (en degré par minute ou par heure).
Lorsque plusieurs composantes du catalyseur sont introduites sur le support mis en forme par imprégnation, l'introduction des composants peut être simultanée par une seule solution d'imprégnation ou avoir lieu séparément par plusieurs solutions d'imprégnation contenant une ou plusieurs des composantes et ceci dans n'importe quel ordre.
Toute solution d'imprégnation décrite dans la présente invention peut comprendre tout solvant polaire connu de l'homme du métier. Ledit solvant polaire utilisé est avantageusement choisi dans le groupe formé par le méthanol, l'éthanol, l'eau, le phénol, le cyclohexanol, pris seuls ou en mélange. Ledit solvant polaire peut également être avantageusement choisi dans le groupe formé par le carbonate de propylène, le DMSO (diméthylsulfoxyde), la N-méthylpyrrolidone (NMP) ou le sulfolane, pris seul ou en mélange. De manière préférée, on utilise un solvant protique polaire. Une liste des solvants polaires usuels ainsi que leur constante diélectrique peut être trouvée dans le livre « Solvents and Solvent Effects in Organic Chemistry », C. Reichardt, Wiley-VCH, 3eme édition, 2003, pages 472-474. De manière très préférée, le solvant utilisé est l'eau ou l'éthanol, et de manière particulièrement préférée, le solvant est l'eau.

Après chaque imprégnation, le catalyseur imprégné est séché à une température inférieure à 200°C afin d'éliminer toute ou une partie du solvant introduit lors de l'imprégnation, de préférence à une température comprise entre 50°C et 250°C, de manière plus préférée entre 70°C et 200°C. Le séchage est préférentiellement réalisé pendant une durée comprise entre 1 et 24 heures, de préférence entre 1 et 20 heures. Le séchage est effectué sous air, ou sous atmosphère inerte (azote par exemple).

Après le séchage, le catalyseur est généralement calciné, généralement sous air. La température de calcination est comprise entre 350 et 650°C et de préférence entre 400 et 650°C et de manière encore plus préférée entre 450 et 550°C. La rampe de température peut éventuellement contenir des paliers en température.
La durée de calcination est généralement comprise entre 0,5 heures et 16 heures, de préférence entre 1 heures et 5 heures.
Plus particulièrement, le catalyseur selon l'invention peut être préparé selon un procédé de préparation comprenant les étapes successives suivantes :
a) on prépare un support comprenant de l'étain, du phosphore et un métal noble,
b) on sèche le précurseur obtenu à l'étape a) sous flux d'un gaz neutre ou sous flux d'un gaz contenant de l'oxygène à une température inférieure à 200°C, et on calcine à une température comprise entre 350 et 650°C,
c) on imprègne le précurseur séché et calciné obtenu à l'étape b) par une solution d'imprégnation comprenant un précurseur cérium
d) on sèche le précurseur obtenu à l'étape c) sous flux d'un gaz neutre ou sous flux d'un gaz contenant de l'oxygène à une température inférieure à 200°C, et on calcine à une température comprise entre 350 et 650°C.

Le cérium est introduit sur un solide imprégné au métal noble, notamment au platine, préalablement séché et calciné. En effet, le fait d'introduire le cérium après le platine permet d'éviter un éventuel effet de lessivage du cérium lors de l'imprégnation du métal noble.
Dans l'étape a), on prépare un support comprenant de l'étain, du phosphore et un métal noble,
L'étain peut être introduit à tout moment de la préparation du support, et de manière préférentielle lors de la mise en forme, ou par imprégnation sur un support déjà formé. De préférence, l'étain est introduit lors de la mise en forme du support.

Il en est de même pour le phosphore. Le phosphore peut être introduit à tout moment de la préparation du support, et de manière préférentielle lors de la mise en forme, ou par imprégnation sur un support déjà formé. Selon une variante, le phosphore est introduit dans le support, c'est-à-dire lors de la mise en forme du support, de préférence avec le composé d'étain. Selon une autre variante, le phosphore est introduit par imprégnation, et de manière particulièrement préférée il est introduit par imprégnation en même temps que le métal noble.

L'introduction du métal noble peut être avantageusement effectuée par une ou plusieurs imprégnations en excès de solution sur le support, ou par une ou plusieurs imprégnations à sec, et, de préférence, par une seule imprégnation en excès dudit support (contenant de préférence le composé d'étain et éventuellement le phosphore), à l'aide de solution(s), de préférence aqueuse(s), contenant le précurseur du métal noble et de préférence le précurseur de phosphore (lorsque le support ne contient pas ou en partie le phosphore).

Ainsi, selon une première variante, l'étape a) comprend les étapes successives suivantes :
a1) on prépare un support comprenant de l'étain en introduisant le précurseur d'étain lors de la mise en forme du support,
a2) on imprègne le support contenant de l'étain obtenu à l'étape a1) par une solution d'imprégnation comprenant au moins un précurseur d'un métal noble et un précurseur de phosphore.
Selon une deuxième variante, l'étape a) comprend les étapes successives suivantes:
a1') on prépare un support comprenant de l'étain et du phosphore en introduisant le précurseur d'étain et le précurseur du phosphore lors de la mise en forme du support,
a2') on imprègne le support contenant de l'étain et du phosphore obtenu à l'étape a1') par une solution d'imprégnation comprenant au moins un précurseur d'un métal noble.
Dans l'étape b) on sèche et on calcine le précurseur obtenu à l'étape a) dans les conditions décrites ci-dessus.

Dans l'étape c) on imprègne le précurseur séché et calciné obtenu à l'étape b) par une solution d'imprégnation comprenant au moins un précurseur de cérium. L'introduction de cérium peut être avantageusement effectuée par une ou plusieurs imprégnations en excès de solution sur le support, ou de préférence par une ou plusieurs imprégnations à sec, et, de manière préférée, par une seule imprégnation à sec dudit précurseur, à l'aide de solution(s), de préférence aqueuse(s), contenant le précurseur de l'élément du groupe des lanthanides, et de préférence le précurseur de cérium.
Dans l'étape d) on sèche et on calcine le précurseur obtenu à l'étape c) dans les conditions décrites ci-dessus.
Selon une autre variante, le catalyseur selon l'invention peut être préparé en préparant un support comprenant de l'étain en introduisant le précurseur d'étain lors de la mise en forme du support, suivi d'une ou plusieurs imprégnations en excès de solution sur le support, ou par une ou plusieurs imprégnations à sec, et, de manière préférée, par une seule imprégnation en excès dudit précurseur, à l'aide de solution(s), de préférence aqueuse(s), contenant un précurseur d'un métal noble, un précurseur de phosphore et de cérium, puis on sèche et on calcine dans les conditions décrites ci-dessus.
Lorsque les divers précurseurs utilisés dans la préparation du catalyseur selon l'invention ne contiennent pas d'halogène ou contiennent de l'halogène en quantité insuffisante, il peut être nécessaire d'ajouter un composé halogéné lors de la préparation. Tout composé connu de l'homme de métier peut être utilisé et incorporé à l'une quelconque des étapes de préparation du catalyseur selon l'invention. En particulier, il est possible d'utiliser des composés organiques tels que des halogénures de méthyle ou d'éthyle, par exemple du dichlorométhane, du chloroforme, du dichloroéthane, du méthylchloroforme ou du tétrachlorure de carbone.
L'halogène peut également être ajouté au moyen d'une imprégnation par une solution aqueuse de l'acide correspondant, par exemple l'acide chlorhydrique, à tout moment de la préparation. Un protocole typique consiste à imprégner le solide de façon à introduire la quantité d'halogène souhaitée. Le catalyseur est maintenu en contact avec la solution aqueuse pendant une durée suffisamment longue pour déposer cette quantité d'halogène.

Le chlore peut également être ajouté au catalyseur selon l'invention au moyen d'un traitement d'oxychloration. Un tel traitement peut par exemple être effectué entre 350 et 550°C pendant plusieurs heures sous un débit d'air contenant la quantité de chlore souhaitée et contenant éventuellement de l'eau.

Avant utilisation le catalyseur est soumis à un traitement sous hydrogène afin d'obtenir une phase métallique active. La procédure de ce traitement consiste par exemple en une montée lente de la température sous courant d'hydrogène, pur ou dilué, jusqu'à la température maximale de réduction, comprise par exemple entre 100 et 600°C, et de préférence entre 200 et 580°C, suivie d'un maintien par exemple durant 30 minutes à 6 heures à cette température. Cette réduction peut être effectuée aussitôt après la calcination, ou plus tard chez l'utilisateur. Il est aussi possible de réduire directement le produit séché chez l'utilisateur.

### Procédé de reformage catalytique

L'invention concerne également un procédé de reformage catalytique d'une charge hydrocarbonée en présence du catalyseur selon l'invention. Le catalyseur selon l'invention peut en effet être mis en œuvre dans des procédés de reformage des essences et de production de composés aromatiques.

Les procédés de reformage permettent d'augmenter l'indice d'octane des fractions essences provenant de la distillation du pétrole brut et/ou d'autres procédés de raffinage telles que par exemple le craquage catalytique ou le craquage thermique. Les procédés de production d'aromatiques fournissent les produits de base (benzène, toluène, xylènes) utilisables en pétrochimie. Ces procédés revêtent un intérêt supplémentaire en contribuant à la production de quantités importantes d'hydrogène indispensable pour les procédés d'hydrogénation et d'hydrotraitement de la raffinerie.

La charge des procédés de reformage contient généralement des hydrocarbures paraffiniques, naphténiques et aromatiques contenant de 5 à 12 atomes de carbone par molécule. Cette charge est définie, entre autres, par sa densité et sa composition pondérale. Ces charges peuvent avoir un point initial d'ébullition compris entre 40°C et 70°C et un point final d'ébullition compris entre 160°C et 220°C. Elles peuvent également être constituées par une fraction ou un mélange de fractions essences ayant des points d'ébullition initiaux et finaux compris entre 40°C et 220°C. La charge peut ainsi également être constituée par un naphta lourd ayant de point d'ébullition compris entre 160°C à 200°C.

Typiquement, le catalyseur de reformage est chargé dans une unité et préalablement soumis à un traitement de réduction telle que décrite ci-dessus.

La charge est ensuite introduite en présence d'hydrogène et avec un rapport molaire hydrogène/hydrocarbures de la charge généralement compris entre 0,1 et 10, de préférence entre 1 et 8. Les conditions opératoires du reformage sont généralement les suivantes: une température de préférence comprise entre 400°C et 600°C, de manière plus préférée entre 450°C et 540°C, et une pression de préférence comprise entre 0,1 MPa et 4 MPa et de manière plus préférée entre 0,25 MPa et 3,0 MPa. Tout ou partie de l'hydrogène produit peut être recyclé à l'entrée du réacteur de reformage.

### EXEMPLES:

Les exemples qui suivent illustrent l'invention.

### Exemple 1 : préparation d'un catalyseur A : Pt/Al₂O₃-Sn-P-Cl (comparatif)

Une boehmite a été synthétisée par alcalinisation d'une solution de nitrate d'aluminium 0,1 mol.L⁻¹ par une solution de soude 1 mol.L⁻¹ à température ambiante et pH contrôlé autour de 10. La suspension est ensuite mûrie une semaine à l'étuve à 95°C sans agitation. Le pH de la suspension après mûrissement évolue ; le pH final est égal à 11,5. Le solide est récupéré par filtration puis lavé dans un volume d'eau environ égal au volume de départ. Le solide est remis en suspension dans l'eau et autoclavé à 150°C pendant 4h. La suspension est centrifugée puis séchée sous courant d'air, à température ambiante.

Le support de l'exemple 1 est préparé en utilisant la boehmite ainsi synthétisée. Une suspension contenant 25% de matière minérale (exprimée en % d'Al₂O₃) est préparée en mélangeant une charge d'alumine γ et la poudre de boehmite dans une solution aqueuse acidifiée contenant 15% masse d'HNO₃/Al₂O₃. On ajoute simultanément dans cette suspension du dichlorure d'étain et de l'acide phosphorique de manière à obtenir 0,3% poids d'étain et 0,4% poids sur le solide final. La fraction solide d'Al₂O₃ est apportée à 88% poids par la boehmite et à 12% par la charge d'alumine γ. Cette suspension contient, en outre, un agent porogène et un tensioactif. L'agent porogène est une phase organique comprenant un mélange de paraffines contenant entre 10 et 12 atomes de carbone dont la température d'ébullition est d'environ 290°C et de densité 0,75 g/cm³. Le tensioactif est du Galoryl. Ces composés sont introduits dans les proportions suivantes : fraction massique de porogène / eau = 1,4% et fraction massique de tensioactif / porogène = 6%.
Le système est soumis à une agitation à 600 rpm jusqu'à l'obtention d'une suspension aux propriétés rhéologiques adaptées à son égouttage (viscosité 250MPa.s).
La mise en forme par coagulation en goutte est effectuée. La colonne d'égouttage est chargée avec une solution ammoniacale à une concentration de 28g/L et une solution organique constituée par la même coupe pétrolière que celle utilisée comme agent porogène dans la préparation de l'émulsion. La suspension est égouttée par l'intermédiaire de buses calibrées. Les billes sont récupérées en fond de colonne et placées dans une étuve ventilée à 120°C sous air humide contenant 200g d'eau / kg air sec pendant 12h. Elles sont ensuite calcinées sous air sec à 650°C pendant 3 heures. Les billes obtenues ont un diamètre de 1,9 mm.
Un catalyseur A est préparé sur ce support, en visant un dépôt de 0,3% poids de platine et 1% poids de chlore sur le catalyseur final. A 100g de support alumine contenant de l'étain, on ajoute 400 cm³ d'une solution aqueuse d'acide hexachloroplatinique et d'acide chlorhydrique. On laisse en contact 4 heures puis on essore. On sèche à 120°C pendant 15h puis on calcine à 500°C sous un débit d'air de 100 litres par heure pendant 3 heures, avec une vitesse de montée en température de 7°C par minute.
La teneur en chlore supérieure à 1% poids après calcination est ajustée à 1% poids par un traitement thermique de déchloration partielle à 520°C sous air sec et additivé de 8000 ppm vol d'eau pendant 2,5 heures.

Le catalyseur A obtenu après déchloration contient 0,29% poids de platine, 0,28% poids d'étain, 0,40% poids de phosphore et 1,01% poids de chlore.

### Exemple 2 : préparation d'un catalyseur B : CePt/Al₂O₃-Sn-Cl (comparatif)

Le support de l'exemple 2 est préparé de manière similaire à l'exemple 1, à la différence que seul du dichlorure d'étain est ajouté dans la suspension de boehmite, pour viser 0,3% poids d'étain dans le solide final.
Une imprégnation en excès de platine est réalisée sur ce support, en visant un dépôt de 0,3% poids de platine et 1% poids de chlore sur le catalyseur final, de la même manière que décrite dans l'exemple 1.
Après calcination, on réalise une imprégnation à sec de nitrate de cérium pour viser 0,15% poids sur le catalyseur final. Avant imprégnation du Ce, le catalyseur est laissé dans une atmosphère saturée en eau pendant une nuit à température ambiante. A 70g de support alumine contenant de l'étain, on ajoute 42 cm³ d'une solution aqueuse de nitrate de cérium. On laisse en contact 30 minutes. Après imprégnation, le solide est laissé à nouveau une nuit à mâturer à température ambiante dans une atmosphère saturée en eau. On sèche à 120°C pendant 15h puis on calcine à 500°C sous un débit d'air de 100 litres par heure pendant 3 heures, avec une vitesse de montée en température de 7°C par minute. L'ajustement de la teneur en chlore est réalisé comme décrit dans l'exemple 1 pendant 2 heures.
Le catalyseur B obtenu après déchloration contient 0,28% poids de platine, 0,29% poids d'étain, 0,16% poids de cérium et 0,99% poids de chlore.

### Exemple 3: préparation d'un catalyseur C: CePt/Al₂O₃-Sn-P_{0.4}-Cl (selon invention)

Un catalyseur C est préparé à partir du support de l'exemple 1, contenant 0,3% poids d'étain et 0,4% poids de phosphore, par imprégnations de platine puis de cérium comme décrit dans l'exemple 2.
Le catalyseur C obtenu après déchloration contient 0,30% poids de platine, 0,14% poids de cérium, 0,28% poids d'étain, 0,39% poids de phosphore et 1,02% poids de chlore.

### Exemple 4 : préparation d'un catalyseur D : CePt/Al₂O₃-Sn-P_{0.8}-Cl (selon invention)

Le support de l'exemple 4 est préparé de manière similaire à l'exemple 1, à la différence que la teneur visée en phosphore est de 0,8% poids sur le catalyseur final. Le platine, puis le cérium sont ensuite imprégnés comme décrit dans l'exemple 2.
Le catalyseur D obtenu après déchloration contient 0,28% poids de platine, 0,15% poids de cérium, 0,30% poids d'étain, 0,76% poids de phosphore et 1,04% poids de chlore.

### Exemple 5 : préparation d'un catalyseur E : PtCe/Al₂O₃-Sn-P_{0.4}-Cl (comparatif)

Un catalyseur E est préparé à partir du support de l'exemple 1, contenant 0,3% poids d'étain et 0,4% poids de phosphore, par imprégnations de cérium puis de platine, ce qui diffère de l'exemple 2 par l'ordre d'introduction par imprégnation des éléments. Les teneurs visées de 0,15% poids de Cérium et 0,30% poids de platine sont identiques. Le catalyseur E obtenu après déchloration contient 0,30% poids de platine, 0,09% poids de cérium, 0,29% poids d'étain, 0,39% poids de phosphore et 0,99% poids de chlore.

### Exemple 6 : préparation d'un catalyseur F : CePt/Al₂O₃-Sn-P_{0.3}-Cl (comparatif)

Le support de l'exemple 6 est préparé de manière similaire à l'exemple 1, à la différence que la teneur visée en phosphore est de 0,3% poids sur le catalyseur final. Le platine, puis le cérium sont ensuite imprégnés comme décrit dans l'exemple 2.
Le catalyseur F obtenu après déchloration contient 0,28% poids de platine, 0,16% poids de cérium, 0,29% poids d'étain, 0,28% poids de phosphore et 1,01% poids de chlore.

### Exemple 7 : préparation d'un catalyseur G : CePt/Al₂O₃-Sn-P_{1.15}-Cl (comparatif)

Le support de l'exemple 6 est préparé de manière similaire à l'exemple 1, à la différence que la teneur visée en phosphore est de 1,15% poids sur le catalyseur final. Le platine, puis le cérium sont ensuite imprégnés comme décrit dans l'exemple 2.

Le catalyseur G obtenu après déchloration contient 0,28% poids de platine, 0,15% poids de cérium, 0,30% poids d'étain, 1,12% poids de phosphore et 0,98% poids de chlore.

### Exemple 8 : préparation d'un catalyseur H : CePt/Al₂O₃-Sn-P_{0.4}-Cl (comparatif)

Un catalyseur H est préparé à partir du support de l'exemple 1, contenant 0.3% poids d'étain et 0,4% poids de phosphore, par imprégnations de platine puis de cérium comme décrit dans l'exemple 2, à la différence que la teneur en cérium visée est de 1,1%poids.
Le catalyseur H obtenu après déchloration contient 0,29% poids de platine, 1,12% poids de cérium, 0,31% poids d'étain, 0,38% poids de phosphore et 1,03% poids de chlore.

### Exemple 9 : préparation d'un catalyseur I : CePtP_{0.4}/Al₂O₃-Sn-Cl (selon invention)

Le support de l'exemple 2 est préparé de manière similaire à l'exemple 1, à la différence que seul du dichlorure d'étain est ajouté dans la suspension de boehmite, pour viser 0,3% poids dans le solide final.
L'imprégnation du platine en excès est réalisée selon l'exemple 1, à la différence que de l'acide phosphorique est ajoutée dans la solution d'acide hexachloroplatinique de manière à viser une teneur de 0,4% poids sur le catalyseur final. L'imprégnation à sec de cérium reprend celle décrite dans l'exemple 2. Les traitements thermiques sont identiques à l'exemple 2.
Le catalyseur **I** obtenu après déchloration contient 0,31% poids de platine, 0,14% poids de cérium, 0,30% poids d'étain, 0,40% poids de phosphore et 1,00% poids de chlore.

### Exemple 10 : Evaluation des performances des catalyseurs A à I en reformage catalytique

Des échantillons des catalyseurs dont les préparations sont décrites dans les exemples 1 à 9 ont été mis en œuvre dans un lit réactionnel adapté à la conversion d'une charge hydrocarbonée, de type naphta issu de la distillation du pétrole. Ce naphta admet la composition suivante :
49,6% poids en composés paraffiniques,
35,3% poids en naphtènes
15,1% poids en composés aromatiques
Pour une densité totale 0,7539 g/cm³. Les points initiaux et finaux de distillation de cette charge sont de 101 et 175°C, respectivement, avec 95% de distillation effectuée à 166°C.
L'indice d'octane recherche est proche de 55.
Après chargement dans le réacteur, les catalyseurs sont activés par traitement thermique sous atmosphère d'hydrogène pur, durant une période de 2h à 490°C. L'évaluation des performances catalytiques est effectuée dans des conditions de réactions de reformage, en présence d'hydrogène et du naphta décrit ci-dessus. Les conditions de mise en œuvre du catalyseur sont les suivantes :
- Pression du réacteur : 0,76 MPa (7,6 barg)
- Débit de charge de 1,8 kg/h par kg de catalyseur
- Rapport molaire hydrogène / hydrocarbures de la charge : 3
La comparaison des catalyseurs est effectuée à iso qualité d'indice d'octane recherche (RON) des effluents liquides (reformats) résultant de la conversion catalytique de la charge. La comparaison est effectuée pour un RON de 100.
La sélectivité est exprimée en rendement de composés en C₅₊ exprimé en pourcentage massique par rapport à l'effluent à un niveau d'activité donnée. Au cours du test, le rendement passe par une première phase au cours de laquelle il augmente avec le temps sous charge qui correspond à la sélectivation du catalyseur par le coke. Puis, après un palier de durée variable, les valeurs de rendement diminuent avec le temps. C'est la période de désactivation du catalyseur. Les comparaisons de catalyseurs en terme de sélectivité seront ici réalisées à partir des valeurs de rendement mesurées sur les paliers. La précision sur cette mesure est de +/- 0.3 points.
L'activité s'exprime par une température nécessaire pour atteindre un indice d'octane donné (aussi appelé RON ou Research Octane Number selon la terminologie anglo-saxonne). Ici, on prendra la température à 24 heures de test. La précision sur cette mesure est de +/- 2°C.
Par stabilité, on entend la stabilité de l'activité qui est généralement mesurée par l'incrément thermique appliqué par unité de temps pour parvenir à maintenir un RON constant de 100.

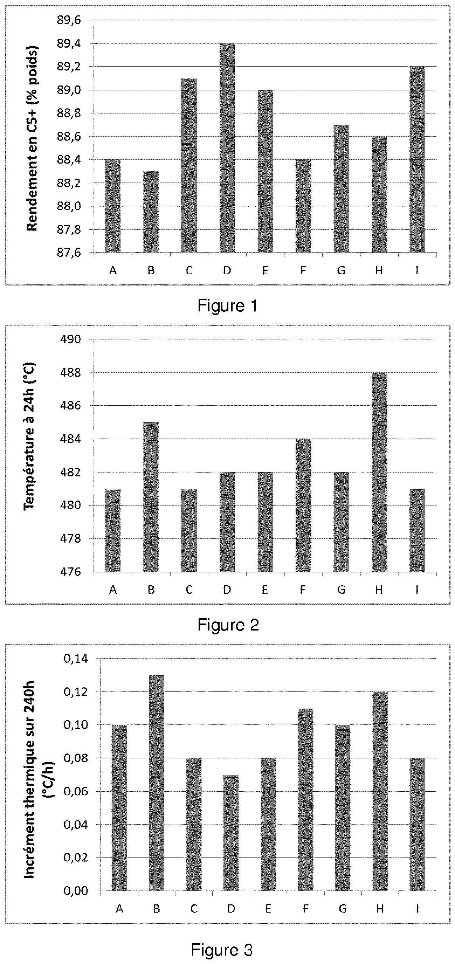

Les résultats des tests sont reportés dans le tableau et les figures 1 à 3 ci-dessous.
La figure 1 montre la sélectivité. La figure 2 concerne l'activité : un catalyseur très actif s'exprime par une température peu élevée pour atteindre le RON. La figure 3 montre la stabilité : un catalyseur stable s'exprime par un l'incrément thermique faible.

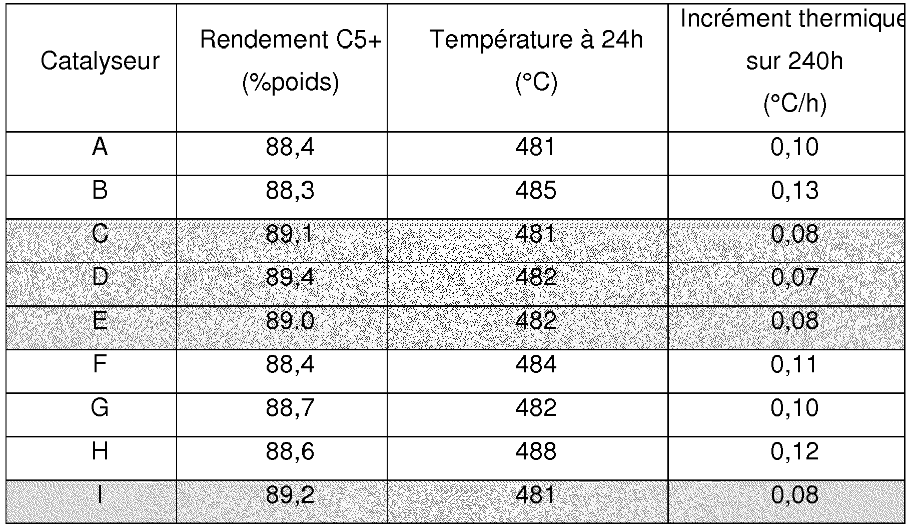

Ces résultats montrent un effet synergique entre le P et le Ce lorsque la teneur en phosphore est comprise entre 0,4 et 1,0% poids de phosphore et la teneur en cérium est entre 0,02 et 0,3 % poids Cet effet permet d'améliorer la sélectivité et la stabilité des catalyseurs sans dégrader leur activité.

## Revendications

1. Catalyseur comprenant un support, au moins un métal noble M, de l'étain, du phosphore et un seul élément du groupe des lanthanides sous forme de cérium, la teneur en métal noble M étant comprise entre 0,2 et 2 % poids, la teneur en étain étant comprise entre 0,005 et 10 % poids, la teneur en élément phosphore étant comprise entre 0,4 et 1 % poids, et la teneur en cérium étant comprise entre 0,02 et 0,3 % poids par rapport à la masse du catalyseur.

2. Catalyseur selon la revendication 1, dans lequel le métal M est le platine ou le palladium.

3. Catalyseur selon l'une des revendications précédentes, dans lequel le rapport atomique Sn/M est compris entre 0,5 et 4,0, le rapport P/M est compris entre 0,2 et 30,0, et le rapport lanthanide(s)/M est compris entre 0,1 et 5,0.

4. Catalyseur selon l'une des revendications précédentes, dans lequel le support comprend de la silice, de l'alumine ou de la silice-alumine.

5. Catalyseur selon l'une des revendications précédentes, lequel contient en outre un composé halogéné.

6. Catalyseur selon la revendication précédente, dans lequel la teneur en composé halogéné est comprise entre 0,1 à 8 % poids par rapport à la masse du catalyseur.

7. Procédé de préparation d'un catalyseur comprenant un support, au moins un métal noble M, de l'étain, du phosphore et un seul élément du groupe des lanthanides sous forme de cérium, la teneur en métal noble M étant comprise entre 0,2 et 2 % poids, la teneur en étain étant comprise entre 0,005 et 10 % poids, la teneur en élément phosphore étant comprise entre 0,4 et 1 % poids, et la teneur en cérium étant comprise entre 0,01 et 0,5 % poids par rapport à la masse du catalyseur, , comprenant les étapes successives suivantes :
a) on prépare un support comprenant l'étain, le phosphore et le métal noble,
b) on sèche le précurseur obtenu à l'étape a) sous flux d'un gaz neutre ou sous flux d'un gaz contenant de l'oxygène à une température inférieure à 200°C, et on calcine à une température comprise entre 350 et 650°C,
c) on introduit tout le cérium en imprégnant le précurseur séché et calciné obtenu à l'étape b) par une solution d'imprégnation comprenant un précurseur de cérium,
d) on sèche le précurseur obtenu à l'étape c) sous flux d'un gaz neutre ou sous flux d'un gaz contenant de l'oxygène à une température inférieure à 200°C, et on calcine à une température comprise entre 350 et 650°C.

8. Procédé selon la revendication précédente, dans lequel l'étape a) comprend les étapes suivantes :
a1) on prépare un support comprenant de l'étain en introduisant le précurseur d'étain lors de la mise en forme du support,
a2) on imprègne le support contenant de l'étain obtenu à l'étape a1) par une solution d'imprégnation comprenant au moins un précurseur d'un métal noble et un précurseur de phosphore.

9. Procédé selon la revendication 7, dans lequel l'étape a) comprend les étapes suivantes :
a1') on prépare un support comprenant de l'étain et du phosphore en introduisant le précurseur d'étain et le précurseur du phosphore lors de la mise en forme du support,
a2') on imprègne le support contenant de l'étain et du phosphore obtenu à l'étape a1') par une solution d'imprégnation comprenant au moins un précurseur d'un métal noble.

10. Procédé selon l'une des revendications 8 ou 9, dans lequel le catalyseur obtenu après l'étape d) est soumis à un traitement sous hydrogène.

11. Utilisation du catalyseur selon l'une des revendications 1 à 6 ou préparé selon l'une des revendications 7 à 10 dans un procédé de reformage.

## Patentansprüche

1. Katalysator, umfassend einen Träger, mindestens ein Edelmetall M, Zinn, Phosphor und ein einziges Element aus der Gruppe der Lanthaniden in Form von Cer, wobei der Gehalt an Edelmetall M zwischen 0,02 und 2 Gew.-% liegt, der Gehalt an Zinn zwischen 0,005 und 10 Gew.-% liegt, der Gehalt an Phosphorelement zwischen 0,4 und 1 Gew.-% liegt und der Gehalt an Cer zwischen 0,02 und 0,3 Gew.-% liegt, bezogen auf die Masse des Katalysators.

2. Katalysator nach Anspruch 1, wobei es sich bei dem Metall M um Platin oder Palladium handelt.

3. Katalysator nach einem der vorhergehenden Ansprüche, wobei das Sn/M-Atomverhältnis zwischen 0,5 und 4,0 liegt, das P/M-Verhältnis zwischen 0,2 und 30,0 liegt und das Lanthanid(en)/M-Verhältnis zwischen 0,1 und 5,0 liegt.

4. Katalysator nach einem der vorhergehenden Ansprüche, wobei der Träger Siliciumdioxid, Aluminiumoxid oder Siliciumdioxid-Aluminiumoxid umfasst.

5. Katalysator nach einem der vorhergehenden Ansprüche, der außerdem eine Halogenverbindung enthält.

6. Katalysator nach dem vorhergehenden Anspruch, wobei der Gehalt an Halogenverbindung zwischen 0,1 und 8 Gew.-% liegt, bezogen auf die Masse des Katalysators.

7. Verfahren zur Herstellung eines Katalysators, umfassend einen Träger, mindestens ein Edelmetall M, Zinn, Phosphor und ein einziges Element aus der Gruppe der Lanthaniden in Form von Cer, wobei der Gehalt an Edelmetall M zwischen 0,02 und 2 Gew.-% liegt, der Gehalt an Zinn zwischen 0,005 und 10 Gew.-% liegt, der Gehalt an Phosphorelement zwischen 0,4 und 1 Gew.-% liegt und der Gehalt an Cer zwischen 0,01 und 0,5 Gew.-% liegt, bezogen auf die Masse des Katalysators, umfassend die folgenden aufeinanderfolgenden Schritte:
a) Herstellen eines Trägers, der das Zinn, den Phosphor und das Edelmetall umfasst,
b) Trocknen der in Schritt a) erhaltenen Vorstufe unter einem Strom von Neutralgas oder unter einem Strom eines sauerstoffhaltigen Gases bei einer Temperatur unter 200 °C und Calcinieren bei einer Temperatur zwischen 350 und 650 °C,
c) Einführen des gesamten Cers durch Imprägnieren der in Schritt b) erhaltenen getrockneten und calcinierten Vorstufe mit einer Imprägnierlösung, die eine Vorstufe von Cer umfasst,
d) Trocknen der in Schritt c) erhaltenen Vorstufe unter einem Strom von Neutralgas oder unter einem Strom eines sauerstoffhaltigen Gases bei einer Temperatur unter 200 °C und Calcinieren bei einer Temperatur zwischen 350 und 650 °C.

8. Verfahren nach dem vorhergehenden Anspruch, wobei Schritt a) die folgenden Schritte umfasst:
a1) Herstellen eines Trägers, der Zinn umfasst, durch Einführen der Vorstufe von Zinn bei der Formung des Trägers,
a2) Imprägnieren des in Schritt a1) erhaltenen Zinn enthaltenden Trägers mit einer Imprägnierlösung, die mindestens eine Vorstufe eines Edelmetalls und eine Vorstufe von Phosphor umfasst.

9. Verfahren nach dem Anspruch 7, wobei Schritt a) die folgenden Schritte umfasst:
a1') Herstellen eines Trägers, der Zinn und Phosphor umfasst, durch Einführen der Vorstufe von Zinn und der Vorstufe von Phosphor bei der Formung des Trägers,
a2') Imprägnieren des in Schritt a1') erhaltenen Zinn und Phosphor enthaltenden Trägers mit einer Imprägnierlösung, die mindestens eine Vorstufe eines Edelmetalls umfasst.

10. Verfahren nach einem der Ansprüche 8 or 9, wobei der nach Schritt d) erhaltene Katalysator einer Behandlung unter Wasserstoff unterworfen wird.

11. Verwendung des Katalysators nach einem der Ansprüche 1 bis 6 oder des nach den Ansprüchen 7 bis 10 hergestellten Katalysators bei einem Reformierungsverfahren.

## Claims

1. Catalyst comprising a support, at least one noble metal M, tin, phosphorus and a single lanthanide group element in the form of cerium, the content of noble metal M being comprised between 0.02 and 2% by weight, the tin content being comprised between 0.005 and 10% by weight, the content of phosphorus element being comprised between 0.4 and 1% by weight, and the cerium content being comprised between 0.02 and 0.3% by weight with respect to the weight of the catalyst.

2. Catalyst according to claim 1, in which the metal M is platinum or palladium.

3. Catalyst according to one of the preceding claims, in which the Sn/M atomic ratio is comprised between 0.5 and 4.0, the P/M ratio is comprised between 0.2 and 30.0, and the lanthanide(s)/M ratio is comprised between 0.1 and 5.0.

4. Catalyst according to one of the preceding claims, in which the support comprises silica, alumina or silica-alumina.

5. Catalyst according to one of the preceding claims, which additionally contains a halogenated compound.

6. Catalyst according to the preceding claim, in which the content of halogenated compound is comprised between 0.1 and 8% by weight with respect to the weight of the catalyst.

7. Process for the preparation of a catalyst comprising a support, at least one noble metal M, tin, phosphorus and a single lanthanide group element in the form of cerium, the content of noble metal M being comprised between 0.02 and 2% by weight, the tin content being comprised between 0.005 and 10% by weight, the content of phosphorus element being comprised between 0.4 and 1% by weight, and the cerium content being comprised between 0.01 and 0.5% by weight with respect to the weight of the catalyst, comprising the following successive stages:
a) preparing a support comprising tin, phosphorus and the noble metal,
b) drying the precursor obtained in stage a) under a flow of a neutral gas or under a flow of a gas containing oxygen at a temperature less than 200°C, and calcining at a temperature comprised between 350 and 650°C,
c) introducing all the cerium by impregnating the dried and calcined precursor obtained in stage b) with an impregnation solution comprising a cerium precursor,
d) drying the precursor obtained in stage c) under a flow of a neutral gas or under a flow of a gas containing oxygen at a temperature less than 200°C, and calcining at a temperature comprised between 350 and 650°C.

8. Method according to the preceding claim, in which stage a) comprises the following stages:
a1) preparing a support comprising tin by introducing the tin precursor during forming of the support,
a2) impregnating the tin-containing support obtained in stage a1) with an impregnation solution comprising at least one precursor of a noble metal and a phosphorus precursor.

9. Method according to claim 7, in which stage a) comprises the following stages:
a1') preparing a support comprising tin and phosphorus by introducing the tin precursor and the phosphorus precursor during forming of the support,
a2') impregnating the support containing tin and phosphorus obtained in stage a1') with an impregnation solution comprising at least one precursor of a noble metal.

10. Method according to one of claims 8 or 9, in which the catalyst obtained after stage d) is subjected to a treatment under hydrogen.

11. Use of the catalyst according to one of claims 1 to 6 or prepared according to one of claims 7 to 10 in a reforming process.
